# EUROPEAN PATENT APPLICATION

(11) **EP 4 391 661 A1**
(43) Date of publication of application: **26.06.2024**
(21) Application number: 21953812.1
(22) Date of filing: 20.08.2021
(51) Int. Cl.: H04W 52/26, H04W 52/02, H04W 52/24

(54) **WIRELESS COMMUNICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN); XU, Weijie, Dongguan, Guangdong 523860 (CN); ZUO, Zhisong, Dongguan, Guangdong 523860 (CN); CUI, Shengjiang, Dongguan, Guangdong 523860 (CN); ZHANG, Zhi, Dongguan, Guangdong 523860 (CN)
(74) Representative: Penza, Giancarlo
(86) International application number: PCT/CN2021/113842
(87) International publication number: WO 2023/019571

(57) **Abstract**

A wireless communication method, and a device, which are beneficial to ensuring successful transmission of data. The method comprises: a terminal device determining, according to first information, a target transport block size of a transport block to be sent, wherein the first information is related to the terminal device acquiring energy by means of energy collection.

## Description

### TECHNICAL FIELD

The embodiments of the present disclosure relate to the field of communications, and in particular to a method for wireless communication and a device.

### BACKGROUND

In a New Radio (NR) system, when being scheduled for data transmission, a sending end needs to determine a Transport Block Size (TBS) according to scheduling information, and the sending end further reads data corresponding to the data transmission from a data cache to perform processing operations, such as coding, modulation and mapping of physical resources. A zero-power-consumption terminal is a type of terminal that adopts the power harvesting technology and the backscatter communication technology to communicate. For the zero-power-consumption terminal, how to determine the TBS to ensure that the data is successfully transmitted is an urgent problem to be solved.

### SUMMARY

The disclosure provides a method for wireless communication and a device, which are beneficial to ensure that the data is successfully transmitted.

In a first aspect, there is provided a method for wireless communication, including: a terminal device determines a target Transport Block Size (TBS) of a transport block to be sent according to first information, where the first information is associated with acquiring energy by the terminal device through power harvesting.

In a second aspect, there is provided a method for wireless communication, including: a network device determines a size of a transport block sent by a terminal device based on second information, where the second information includes at least one of followings:
first information associated with acquiring energy by the terminal device through power harvesting;
first indication information for indicating the size of the transport block;
start identification information of the transport block; or
end identification information of the transport block.

In a third aspect, there is provided a terminal device configured to perform the methods of the first aspect or various implementations thereof.

In particular, the terminal device includes functional modules configured to perform the methods of the first aspect or various implementations thereof.

In a fourth aspect, there is provided a network device configured to perform the methods of the second aspect or various implementations thereof.

In particular, the network device includes functional modules configured to perform the methods of the second aspect or various implementations thereof.

In a fifth aspect, there is provided a terminal device including a processor and a memory. The memory is configured to store a computer program, and the processor is configured to invoke and run the computer program stored in the memory to perform the methods of the first aspect or various implementations thereof.

In a sixth aspect, there is provided a network device including a processor and a memory. The memory is configured to store a computer program, and the processor is configured to invoke and run the computer program stored in the memory to perform the methods of the second aspect or various implementations thereof.

In a seventh aspect, there is provided a chip configured to implement the methods of any one of the first to second aspects or various implementations thereof.

In particular, the chip includes a processor configured to invoke and run a computer program from a memory, to enable a device on which the chip is mounted to perform the methods of any one of the first to second aspects or various implementations thereof.

In an eighth aspect, there is provided a computer-readable storage medium configured to store a computer program that causes a computer to perform the methods in any one of the first to second aspects or various implementations thereof.

In a ninth aspect, there is provided a computer program product including computer program instructions that cause a computer to perform the methods in any one of the first to second aspects or various implementations thereof.

In a tenth aspect, there is provided a computer program that, when executed on a computer, causes the computer to perform the methods in any one of the first to second aspects or various implementations thereof.

According to the technical schemes describe above, the terminal device may determine the target TBS according to the first information associated with acquiring the power by the terminal device through the power harvesting, and furthermore the terminal device sends the transport block according to the TBS, which is beneficial to ensure that the data is successful transmitted.

### BRIEF DESCRIPTION OF THE DRAWINGS

FIG. 1 is a schematic diagram of a communication system architecture according to an embodiment of the present disclosure.
FIG. 2 is a schematic diagram of a zero-power-consumption communication system according to an example of the present disclosure.
FIG. 3 is a schematic diagram showing the principle of power harvesting.
FIG. 4 is a schematic diagram showing the principle of backscatter communication.
FIG. 5 is a circuit schematic diagram showing the principle of resistive load modulation.
FIG. 6 is a schematic flowchart of a method for wireless communication provided according to an embodiment of the present disclosure.
FIG. 7 is a schematic diagram of determining a TBS according to power storage state information of a terminal device.
FIG. 8 is a schematic diagram of determining a TBS according to energy storage capability information of a terminal device.
FIG. 9 is a schematic diagram of determining a TBS according to a communication duration supported by a terminal device.
FIG. 10 is a schematic diagram of determining a TBS according to strength information of a power supplying signal.
FIG. 11 is a schematic flowchart of another method for wireless communication provided according to an embodiment of the present disclosure.
FIG. 12 is a schematic block diagram of a terminal device provided according to an embodiment of the present disclosure.
FIG. 13 is a schematic block diagram of a network device provided according to an embodiment of the present disclosure.
FIG. 14 is a schematic block diagram of a communication device provided according to an embodiment of the present disclosure.
FIG. 15 is a schematic block diagram of a chip provided according to an embodiment of the present disclosure.
FIG. 16 is a schematic block diagram of a communication system provided according to an embodiment of the present disclosure.

### DETAILED DESCRIPTION

The technical scheme in the embodiments of the disclosure will be described below in conjunction with the drawings in the embodiments of the disclosure. It is apparent that the described embodiments are parts of the embodiments of the disclosure, not all of the embodiments. Based on the embodiments of the disclosure, all other embodiments obtained by those skilled in the art without creative effort fall within the scope of protection of the disclosure.

The technical scheme of the embodiments of the present disclosure may be applied to various communication systems, such as Global System of Mobile Communication (GSM) system, Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolution system of NR system, LTE-based access to unlicensed spectrum (LTE-U) system, NR-based access to unlicensed spectrum (NR-U) system, Non-Terrestrial Networks (NTN) system, Universal Mobile Telecommunications System (UMTS), Wireless Local Area Network (WLAN), Wireless Fidelity (Wi-Fi), 5th-Generation (5G) system, cellular Internet of Things system, cellular Passive Internet of Things system or other communication systems, etc.

In general, traditional communication systems support a limited number of connections and the connections are easy to implement. However, with the development of communication technology, mobile communication systems will not only support traditional communication, but also support, for example, Device To Device (D2D) communication, Machine To Machine (M2M) communication, Machine Type Communication (MTC), Vehicle To Vehicle (V2V) communication, or Vehicle To Everything (V2X) communication, etc. Embodiments of the present disclosure may also be applied to these communication systems.

Optionally, the communication system in embodiments of the present disclosure may be applied to a Carrier Aggregation (CA) scenario, a Dual Connectivity (DC) scenario, or a Standalone (SA) networking scenario.

Optionally, the communication system in the embodiments of the present disclosure may be applied to an unlicensed spectrum, and the unlicensed spectrum may also be considered as a shared spectrum. Optionally, the communication system in the embodiments of the present disclosure may also be applied to a licensed spectrum, and the licensed spectrum may also be considered as a non-shared spectrum.

Embodiments of the present disclosure are described in connection with a network device and a terminal device. The terminal device may also be referred to as a User Equipment (UE), an access terminal, a subscriber unit, a subscriber station, a mobile station, a remote terminal, a mobile device, a user terminal, a terminal, a wireless communication device, a user agent or a user device, etc.

In the embodiments of the present disclosure, the network device may be a device configured to communicate with a mobile device, and the network device may be an Access Point (AP) in a WLAN, a Base Transceiver Station (BTS) in a GSM or CDMA, a NodeB (NB) in a WCDMA, an evolved Node B (eNB or eNodeB) in an LTE, a relay station or an access point, a vehicle-mounted device, a wearable device, a network device (gNB) in an NR network, a network device in a cellular Internet of Things, a network device in a cellular passive Internet of Things, a network device in a future evolved PLMN network or a network device in an NTN network, etc.

By way of example and not as a limitation, in the embodiments of the present disclosure, the network device may have mobility characteristics, for example, the network device may be a mobile device. Optionally, the network device may be a satellite, a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, and the like. Optionally, the network device may also be a base station located on land, water, etc.

In the embodiments of the present disclosure, the network device may provide a service for a cell, and the terminal device communicates with the network device through transmission resources (e.g. frequency resources, or spectrum resources) used by the cell. The cell may be a cell corresponding to the network device (e.g. base station), and the cell may belong to a macro base station or a base station corresponding to a small cell. The small cell may include a metro cell, a micro cell, a pico cell, a femto cell, etc. These small cells have characteristics of small coverage and low transmission power, and these small cells are suitable for providing a high-rate data transmission service.

The terminal device may be a STATION (ST) in the WLAN, a cellular telephone, a cordless telephone, a Session Initiation Protocol (SIP) telephone, a Wireless Local Loop (WLL) station, a Personal Digital Assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved Public Land Mobile Network (PLMN) network, a terminal device in a cellular Internet of Things, a terminal device in a cellular passive Internet of Things, etc.

In the embodiments of the present disclosure, the terminal device may be deployed on land, and include indoor or outdoor device, hand-held device, wearable device or vehicle-mounted device. The terminal device may also be deployed on the water (such as on the ships, etc.). The terminal device may also be deployed in the air (such as, in airplanes, in balloons and in satellites, etc.).

In the embodiments of the present disclosure, the terminal device may be a mobile phone, a Pad, a computer with wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, etc.

By way of example and not as a limitation, in the embodiments of the present disclosure, the terminal device may also be a wearable device. The wearable device may also be referred to as a wearable smart device, which is a general term of wearable devices that are intelligently designed and developed by applying wearable technology to daily wear, such as, glasses, gloves, watches, clothing and shoes. The wearable device is a portable device that is worn directly on the body or integrated into the user's clothes or accessories. The wearable device is not only a kind of hardware device, but also implements powerful functions through software support, data interaction and cloud interaction. The generalized wearable smart device has full functions and a large size, and the generalized wearable smart device may implement complete or partial functions without relying on smart phones, such as smart watches or smart glasses, and the generalized wearable smart device only focus on certain application functions and need to be used in conjunction with other devices (such as, smart phones), such as, various smart bracelets and smart jewelry for monitoring physical signs.

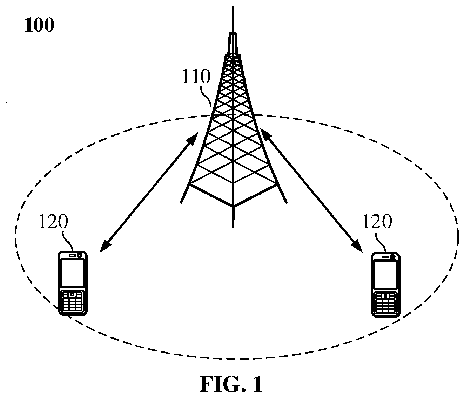

Exemplarily, the communication system 100 to which the embodiments of the present disclosure are applied is illustrated in FIG. 1. The communication system 100 may include a network device 110. The network device 110 may be a device that communicates with a terminal device 120 (which also referred to as a communication terminal or terminal). The network device 110 may provide communication coverage for a particular geographic area and may communicate with terminal devices located within the coverage.

FIG. 1 exemplarily illustrates one network device and two terminal devices. In some embodiments, the communication system 100 may include multiple network devices, and other numbers of terminal devices may be included within the coverage of each network device, which is not limited by the embodiments of the present disclosure.

Optionally, the communication system 100 may also include other network entities, such as, network controllers, mobility management entities, etc., which are not limited by the embodiments of the present disclosure.

It is to be understood that a device having a communication function in the network or system in the embodiments of the present disclosure may be referred to as a communication device. The communication system 100 illustrated in FIG. 1 is taken as an example, the communication device may include a network device 110 and a terminal device 120 that both have the communication function, and the network device 110 and the terminal device 120 may be specific devices described above, which will not be described herein. The communication device may also include other devices in the communication system 100, such as, network controllers, mobility management entities and other network entities, which are not limited in the embodiments of the present disclosure.

It is to be understood that the terms "system" and "network" are often used interchangeably herein. In the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the disclosure generally indicates that the relationship between the related objects is "or".

It is to be understood that the reference to "indication" in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

In the description of the embodiments of the present disclosure, the term "correspondence" may mean that there is a direct correspondence or an indirect correspondence between the two, may also mean that there is an association relationship between the two, and may also be a relationship between indication and being indicated, configuration and being configured, etc.

In the embodiments of the present disclosure, "predefined" may be achieved by pre-storing corresponding codes, tables or other means used for indicating relevant information in devices (e.g., including terminal devices and network devices), and the present disclosure is not limited to the specific implementation thereof. For example, predefined may refer to what is defined in the protocol.

In the embodiments of the present disclosure, the "protocol" may be a standard protocol in the communication field. For example, the protocol may include an LTE protocol, an NR protocol, and related protocols applied in future communication systems, which are not limited in the present disclosure.

In order to understand the technical proposal of the embodiment of the present disclosure, the related technology of the present disclosure is explained.

Firstly, zero-power-consumption communication

The zero-power-consumption communication uses power harvesting and backscatter communication technologies. The zero-power-consumption communication system is formed by the network device and a zero-power-consumption terminal.

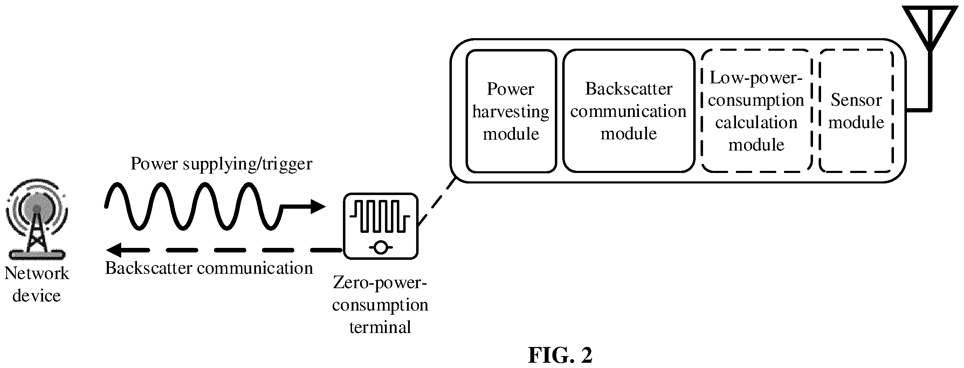

As shown in FIG. 2, the network device is configured to send a wireless power supplying signal and a downlink communication signal to the zero-power-consumption terminal, and receive a backscatter signal of the zero-power-consumption terminal. A basic zero-power-consumption terminal includes a power harvesting module, a backscatter communication module, and a low-power-consumption calculation module. In addition, the zero-power-consumption terminal may also be provided with a memory or a sensor, and is configured to store some basic information (such as an item identifier) or acquire sensing data such as an environment temperature and an environment humidity.

The key technologies in the zero-power-consumption communication will be explained as follows.

### 1. Radio Frequency (RF) Power Harvesting

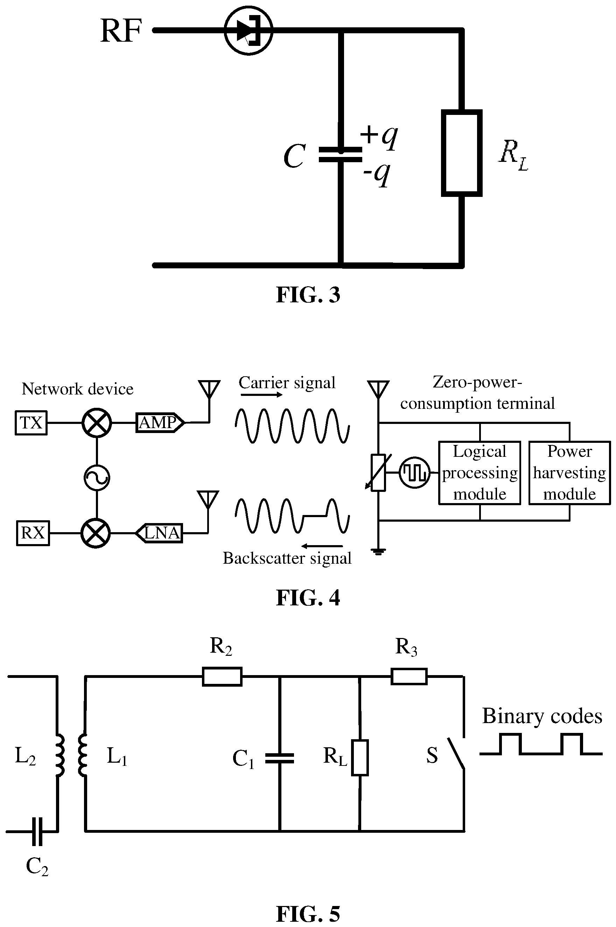

As shown in FIG. 3, the RF power harvesting module harvests space electromagnetic wave energy based on the principle of electromagnetic induction, so as to obtain energy required to drive the zero-power-consumption terminal, for example, for driving a low-power-consumption demodulation and modulation module, a sensor, and internal storage reading. Therefore, the zero-power-consumption terminal does not need a conventional battery.

### 2. Backscatter communication

As shown in FIG. 4, a zero-power-consumption terminal receives a carrier signal sent by a network device; modulates the carrier signal; loads information to be sent; and radiates the modulated signal from an antenna. Such information transmission process is referred to as the backscatter communication. The backscatter and load modulation functions are inextricably linked. The load modulation is to adjust and control circuit parameters of an oscillation circuit of the zero-power-consumption terminal according to the beat of a data stream, so as to enable the parameters such as the impedance of the electronic tag to vary accordingly, thereby completing a modulation process. A load modulation technology mainly includes resistive load modulation and capacitive load modulation. In the resistive load modulation, a load is connected in parallel with a resistor. The resistor is turned on or off based on control of a binary data stream, as shown in FIG. 5. A circuit voltage is changed due to the turn-on and off of the resistor, so that Amplitude Shift Keying (ASK) is realized, that is, signals are modulated and transmitted by adjusting amplitudes of the backscatter signals of the zero-power-consumption terminal. Similarly, during capacitive load modulation, changes in a circuit resonance frequency may be achieved by turning on or off a capacitor, so as to achieve Frequency Shift Keying (FSK), that is, the signals are modulated and transmitted by adjusting the working frequencies of backscatter signals of the zero-power-consumption terminal.

It can be seen that the zero-power-consumption terminal performs information modulation on an incoming-wave signal by means of load modulation, a backscatter communication process is realized. Therefore, the zero-power-consumption terminal has significant advantages.
(1) The terminal does not actively sends a signal, so the terminal does not need a complex RF link, such as, a Power Amplifier (PA), a RF filter, and the like.
(2) The terminal does not need to actively generate a high-frequency signal, so the terminal does not need a high-frequency crystal oscillator.
(3) The terminal does not need to consume the energy to transmit a signal with the help of the backscatter communication.

### 3. Coding technology

The data transmitted by the electronic tag may use codes of different forms to represent binary "1" and "0". A RF identification system generally uses one of the following coding methods: Non Return Zero (NRZ) coding, Manchester coding, Unipolar RZ coding, Differential Bi-Phase (DBP) coding, the differential coding, the Pulse interval encoding (PIE), the Bi-Phase Space Coding (FM0), the Miller coding, differential dynamic coding, etc. Generally speaking, different pulse signals are used to represent 0 and 1 through different coding methods.

In some scenarios, the zero-power-consumption terminals may be classified into the following types based on their energy source and usage mode.

### 1. Passive zero-power-consumption terminal

A battery does not need to be provided in the zero-power-consumption terminal; and when the zero-power-consumption terminal approaches the network device (for example, a reader-writer of an RFID system), the zero-power-consumption terminal is within a near field range formed through radiation of an antenna of the network device. Therefore, an antenna of the zero-power-consumption terminal generates an induced current through electromagnetic induction, and then the induced current drives a low-power-consumption chip circuit of the zero-power-consumption terminal, so as to demodulate a forward link signal and modulate a backward link signal. For a backscatter link, the zero-power-consumption terminal transmits the signal by means of backscatter.

Therefore, regardless of a forward link or a backward link, the passive zero-power-consumption terminal does not need to be driven by a built-in battery, so that the passive zero-power-consumption terminal is a true zero-power-consumption terminal.

The passive zero-power-consumption terminal does not need the battery, and an RF circuit and a baseband circuit thereof are very simple, for example, devices such as Low Noise Amplifier (LNA), PA, crystal oscillator, and Analog-to-Digital Converter (ADC) are not required, so that the passive zero-power-consumption terminal has various advantages of being small in size, light in weight, cheap in price, and long in service life.

### 2. Semi-passive zero-power-consumption terminal

The semi-passive zero-power-consumption terminal is also not provided with the conventional battery, but may use the RF power harvesting module to harvest radio wave energy, and store the harvested energy in an energy storage unit (for example, a capacitor). After obtaining the energy, the energy storage unit may drive the low-power-consumption chip circuit of the zero-power-consumption terminal, so as to demodulate the forward link signal and modulate the backward link signal. For the backscatter link, the zero-power-consumption terminal transmits the signal by means of backscatter.

Therefore, regardless of a forward link or a backward link, the semi-passive zero-power-consumption terminal does not need to be driven by a built-in battery, and although energy stored by the capacitor is used during operation, the energy is derived from radio energy harvested by the power harvesting module, so that the semi-passive zero-power-consumption terminal is a true zero-power-consumption terminal.

The semi-passive zero-power-consumption terminal inherits various advantages of the passive zero-power-consumption terminal, so that the semi-passive zero-power-consumption terminal has various advantages of being small in size, light in weight, cheap in price, and long in service life.

### 3. Active zero-power-consumption terminal

In some scenarios, the zero-power-consumption terminal used may also be an active zero-power-consumption terminal, and the terminal may be provided with a built-in battery. The battery is configured to drive the low-power-consumption chip circuit of the zero-power-consumption terminal, so as to demodulate the forward link signal and modulate the backward link signal. However, for the backscatter link, the zero-power-consumption terminal transmits the signal by means of backscatter. Therefore, zero power consumption of the terminal is mainly reflected in the fact that signal transmission of the backward link does not require the power of the terminal per se, but uses a backscatter mode.

### Secondly, the cellular passive Internet of Things (IoT)

As applications in 5G industry increase, there are more and more types and application scenarios of linkers; there are also higher requirements for the price and power consumption of a communication terminal; application of battery-free and low-cost passive Internet of Things device becomes the key technology of the cellular Internet of Things, which is able to enrich the type and number of terminals in the 5G network link, so that Internet of Everything can be truly realized. The passive Internet of Things device may be based on the zero-power-consumption communication technology, for example, an RFID technology, and extends based on this, so as to adapt the cellular Internet of Things.

In actual network deployment, a technical bottleneck of the zero-power-consumption communication technology is a limited coverage distance of the forward link, and the main reason is that the communication distance of the forward link is limited by the signal strength of a wireless signal arriving at the zero-power-consumption terminal. Based on the current process, the zero-power-consumption terminal generally needs to consume 10 microwatts (uw) of power, so as to drive a low-power-consumption circuit, which means that the power of the signal arriving at the zero-power-consumption terminal at least needs to be -20 dBm. Limited by the requirements of radio regulation, the transmitting power of the network device is generally not too high, for example, in the Industrial Scientific Medical (ISM) frequency band where RFID operates, the maximum transmitting power is 30 dBm. Therefore, considering of the radio propagation loss in space, a transmission distance of the passive zero-power-consumption terminal generally ranges from 10 m to dozens of meters.

The semi-passive zero-power-consumption terminal has the potential to significantly extend the communication distance, this is because the semi-passive zero-power-consumption terminal may harvest radio waves by using the RF power harvesting module, therefore, radio energy may be continuously acquired and stored in the energy storage unit. After obtaining enough energy, the energy storage unit may drive the low-power-consumption circuit to word to perform operations for demodulating the forward link signal and modulating the backward link signal. In this case, the semi-passive zero-power-consumption terminal is equivalent to an active terminal, of which the downlink coverage depends on the sensitivity (which is generally far less than an RF power harvesting threshold) of a receiver of a downlink signal. Based on the current process, when the strength of the received radio signal is not less than -30 dBm, the power harvesting module may perform power harvesting and input electric energy to the energy storage unit. Therefore, the coverage of the forward link of the semi-passive zero-power-consumption terminal depends on the RF power harvesting threshold (for example, -30 dBm). Compared with the passive zero-power-consumption terminal, the strength of the received radio signal is relaxed from -20 dBm to -30 dBm, so that 10 dB of link budget gain may be obtained, thereby improving the downlink coverage by more than 3 times.

However, while the coverage of the forward link is improved, the semi-passive zero-power-consumption terminal also has the problem of reduced charging efficiency. As the strength of the received signal reduces, the energy that may be harvested and stored by the power harvesting module is greatly reduced. For example, when the strength of the received signal is -30 dBm, that is, 1 uw, the energy that may be harvested and stored is much less than 1 uw (the efficiency of power harvesting is greatly reduced). In another aspect, as described above, the low-power-consumption circuit of the zero-power-consumption terminal may consume 10 uw of to drive the low-power-consumption circuit.

In the NR system, when being scheduled for data transmission, a sending end needs to determine a TBS according to scheduling information, and the sending end further reads data corresponding to the data transmission from a data cache to perform processing operations, such as coding, modulation and mapping of physical resources. For the zero-power-consumption terminal, how to determine the TBS to ensure that the data is successfully transmitted is an urgent problem to be solved.

In order to understand the technical schemes of the embodiments of the present disclosure, the technical schemes of the present disclosure are described through specific embodiments. The following related technologies used as optional schemes can be arbitrarily combined with the technical schemes of the embodiments of the present disclosure, and all of them fall within the protection scope of the embodiments of the present disclosure. The embodiments of the present disclosure include at least some of the following contents.

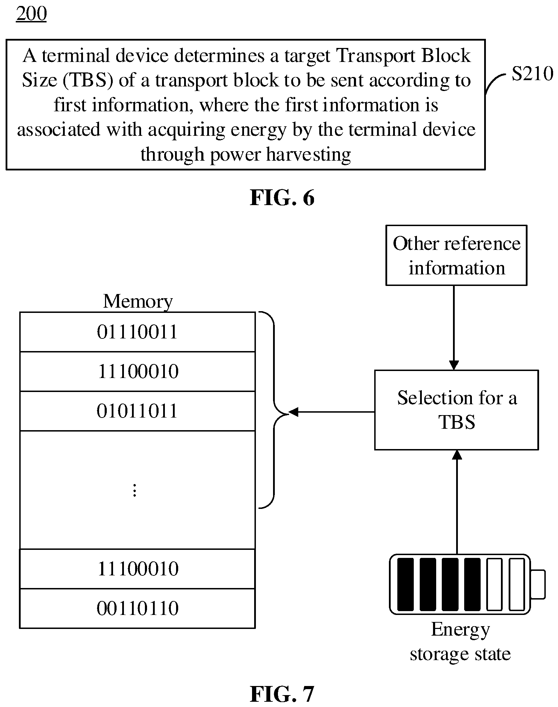

FIG. 6 is a schematic flowchart of a method 200 for wireless communication according to an embodiment of the present disclosure. As shown in FIG. 6, the method 200 includes an operation S210.

In operation S210, a terminal device determines a target Transport Block Size (TBS) of a transport block to be sent according to first information, where the first information is associated with acquiring energy by the terminal device through power harvesting.

In some embodiments, the first information associated with acquiring energy by the terminal device through power harvesting may be relevant information in a scenario where the terminal device needs to obtain energy for communication through the power harvesting, for example information such as the energy storage of the terminal device, the strength of the power supplying signal, etc. The information such as the energy storage of the terminal device is considered to determine the target TBS, which is beneficial to ensure the successful transmission of the transport block and avoid the transmission failure caused by insufficient energy storage.

It is to be understood that a specific manner in which the terminal device obtains the energy through the power harvesting is not limited in the present disclosure, and by way of example and not limitation, the terminal device may obtain the energy through wireless power supplying, such as through the power supplying signal, the solar energy, the pressure or the temperature.

In some embodiments, the terminal device is a zero-power-consumption terminal, and the terminal device does not actively transmit signals, but uses signals sent by the network device or other devices to carry information.

In some embodiments, the terminal device may communicate with other devices in a zero-power-consumption communication manner. The zero-power-consumption communication manner may include a backscatter communication manner, or may also include other manners for communication by the zero-power-consumption terminal introduced in the evolution of standards, but the present disclosure is not limited thereto.

In other embodiments, the terminal device may also obtain energy through the wired power supplying. For example, the terminal device is an active terminal. The terminal device may communicate with other devices through a non-zero-power-consumption communication manner. For example, the terminal device can actively transmit signals to implement the communication with other devices.

It is to be noted that, in the embodiments of the present disclosure, when the terminal device communicates in the backscatter manner, a signal for power supplying (or referred to as the power supplying signal) may be the same as or different from a signal (or referred to as a carrier signal) for generating the backscatter signal by the terminal device. The signal for power supplying and the signal for generating the backscatter signal may be sent by the same device or may be sent by different devices, which is not limited in the embodiments of the present disclosure.

It is to be understood that in the embodiment of the present disclosure, a power supplying device may send a power supplying signal used for the power harvesting by the terminal device. The power supplying device may be a network device or may also be a third party device, and the third party device may be a dedicated power supplying node in a cell. The power supplying device may continuously or intermittently send the power supplying signal, so that the terminal device may perform the power harvesting. After acquiring sufficient energy, the terminal device may perform corresponding communication processes, such as, measuring, sending signal, sending channel, receiving signal, receiving channel, etc.

In some embodiments, the terminal device is configured with an RF power harvesting module for power harvesting, such as collecting radio waves, solar energy, etc., and the RF power harvesting module further stores the acquired energy in an energy storage unit. After the energy storage unit acquires sufficient energy, the energy may drive a chip circuit inside the terminal device to work to perform operations such as demodulating the forward link signal and modulating the backward link signal. The terminal device is a semi-passive zero-power-consumption terminal.

In some embodiments, when the terminal device needs to send data, the terminal device may determine a TBS corresponding to a transport block to be sent, and furthermore, the terminal device may read data having a size corresponding to the TBS from a memory to send.

It is to be understood that in the embodiment of the present disclosure, the transport block to be sent may be sent to a network device, i.e., the data transmission is an uplink transmission. Optionally, the transport block to be sent may be sent to another terminal device, i.e., the data transmission may be a sidelink transmission.

It should also be understood that the data transmission performed by the terminal device may be based on the scheduling from the network device, or may be actively initiated by the terminal device, which is not limited in the present disclosure.

In some scenarios, the terminal device includes a sensor device, and the energy harvested by the terminal device may drive the chip circuit to collect sensor data and store the collected sensor data in a memory.

In some embodiments of the present disclosure, the terminal device may determine the TBS corresponding to the transport block to be sent based on first information. The first information is associated with acquiring energy by the terminal device through power harvesting.

For example, the terminal device needs to perform the power harvesting to drive the internal chip circuit to implement communication. Therefore, the information of the terminal device such as energy storage capability, efficiency of the power harvesting, energy storage state, power consumption, etc. may be considered to determine the TBS.

For another example, in a case where the terminal device needs a power supplying signal sent by the power supplying device to perform the power harvesting, the strength of the power supplying signal will also affect the efficiency of the power harvesting of the terminal device and further affect the energy storage of the terminal device. Therefore, the strength of the power supplying signal may be considered to determine the TBS.

For yet another example, before the terminal device performs the data transmission, the terminal device needs to drive a low-power-consumption circuit to perform processing operations prior to the data transmission, such as processing related to backscatter and processing operations related to reception. The processing related to backscatter may include: reading data of a transport block from a memory, coding the read transport block, modulating a carrier signal to obtain a backscatter signal, etc. The processing operations related to reception may include processing operations such as demodulating the information carried in the carrier signal, decoding the information and storing the decoded information. All of the above processing operations need to consume a certain amount of energy, and the larger the transport block, the more the energy consumed. Therefore, the power consumption caused by the above processing operations may be considered when the target TBS is determined.

In some embodiments of the present disclosure, the first information includes at least one of followings:
energy storage state information of the terminal device;
energy storage capability information of the terminal device;
power consumption information of the terminal device;
information about communication duration supported by the terminal device; or
strength information of a power supplying signal of the terminal device.

In some embodiments, the terminal device may determine the target TBS based on the first information and resource configuration information for an uplink transmission.

Optionally, the resource configuration information for the uplink transmission may be pre-configured, e.g. configured through grant-free resource configuration information; or the resource configuration information for the uplink transmission may also be dynamically scheduled, e.g. configured through scheduling information from a network device.

It is to be understood that, in the embodiments of the present disclosure, when the terminal device needs to perform a sidelink transmission, the terminal device may determine the target TBS according to the first information and the resource configuration information for the sidelink transmission, and the specific method of the determination is similar to that of the uplink transmission. The following description will be made by taking the determination of the TBS in the uplink transmission as an example, but the present disclosure is not limited thereto.

In some embodiments, the resource configuration information for the uplink transmission includes at least one of followings:
transmission resource information for the uplink transmission, a modulation mode for the uplink transmission, a data rate for the uplink transmission, or a coding manner for uplink transmission.

Optionally, the transmission resource information for the uplink transmission includes time-domain resource information and/or frequency-domain resource information for the uplink transmission.

In some implementations, the operation that the terminal device determines the TBS according to the first information and the resource configuration information for the uplink transmission includes following operations.

The terminal device determines a first candidate TBS according to the first information.

The terminal device determines a second candidate TBS according to the resource configuration information for the uplink transmission.

The terminal device determines the target TBS from the first candidate TBS and the second candidate TBS.

For example, a smaller value is determined, from the first candidate TBS and the second candidate TBS, as the target TBS.

In other implementations, the time-domain resource information for the uplink transmission corresponds to a transmission duration, and the terminal device may determine the target duration information for calculating the target TBS among the transmission duration and the communication duration supported by the terminal device. For example, a smaller value may be determined, from a value of the transmission duration and a value of the communication duration, as the target duration information for calculating the target TBS. Furthermore, other reference information, such as information other than the communication duration in the first information, and other configuration information other than duration information of the time-domain resource in the resource configuration information for the uplink transmission, may also be considered to determine the target TBS.

Furthermore, the terminal device may read the data of the transport block having a size corresponding to the target TBS from a memory according to the determined target TBS, and perform processing such as coding, backscatter signal modulation, etc. on the data of the transport block, so as to send the transport block.

In some embodiments of the present disclosure, the method 200 further includes following operation.

The terminal device sends the first information to the network device.

For example, the first information is sent through uplink control information (e.g. UCI).

Optionally, the first information and the transport block are sent through a same uplink signal.

Therefore, the network device may determine the target TBS according to the first information reported by the terminal device, and further detect the transport block according to the TBS, thereby ensuring that the terminal device has a consistent understanding of the TBS with the network device.

In other embodiments of the present disclosure, the method 200 further includes following operation.

The terminal device sends first indication information to the network device, where the first indication information is used for indicating a target TBS.

That is to say, the terminal device may directly report the determined target TBS to the network device.

Optionally, the first indication information is sent through uplink control information (i.e., UCI).

Optionally, the first indication information and the transport block are sent through a same uplink signal. That is to say, the terminal device notifies the TBS of the transport block to the network device when sending the transport block.

In still other embodiments, the transport block includes start identification information and/or end identification information, the start identification information being used for identifying a starting position of the transport block, and the end identification information being used for identifying an ending position of the transport block. That is to say, the network device may determine the target TBS according to the start identification information and/or the end identification information of the transport block.

Optionally, the start identification information and the end identification information of the transport block may be identification information about which the network device and the terminal device have a consistent understanding, and are respectively set at the starting position of the transport block and the ending position of the transport block.

In some embodiments, the network device may also determine the resource configuration information for uplink transmission according to the first information or the target TBS. That is to say, the first information or information about the TBS reported by the terminal device may assist the network device to perform the resource scheduling for the uplink transmission.

For example, the terminal device may report information about communication duration supported by the terminal device to the network device. In this case, the transmission duration corresponding to the time-domain resource for the uplink transmission configured by the network device may be less than or equal to the information about communication duration supported by the terminal device.

In some embodiments of the present disclosure, the terminal device may also perform quantization processing on the TBS determined according to the first information, and further determine the quantized TBS as the target TBS.

As an implementation, the operation that the terminal device determines the target TBS of the transport block to be sent according to the first information includes following operations.

The terminal device determines an intermediate variable for TBS according to the first information.

The terminal device obtains the target TBS by quantizing the intermediate variable for TBS.

For example, a TBS, which is not larger than the intermediate variable for TBS and has a smallest difference from the intermediate variable for TBS, is determined from a TBS table, as the target TBS.

That is to say, in the TBS table, the TBS most approximating the intermediate variable may be determined, from the TBSs that are not less than the intermediate variable, as the target TBS.

Optionally, the TBS table may be predefined.

In some embodiments, the TBS table may include information of multiple TBSs that may be determined according to at least one of followings:
a maximum TBS of transport blocks whose transmission can be supported by multiple communication durations;
a maximum TBS of transport blocks whose transmission can be supported by multiple energy storage states;
a maximum TBS of transport blocks whose transmission can be supported by multiple energy storage capabilities; or
a maximum TBS of transport blocks whose transmission can be supported by multiple receiving strengths (or multiple strength levels) of the power supplying signals.

It is to be understood that the terminal device may determine the intermediate variable for TBS according to the first information in conjunction with the resource configuration information for the uplink transmission, and the specific implementation of which is described with reference to the related embodiments above, which will not be repeated herein for the sake of brevity.

According to the embodiment of the disclosure, through quantization processing performed on the TBS, the network device only needs to detect the transport block with a specific size, which can reduce the complexity of detecting the transport block by the network device.

Hereinafter, a method for determining the TBS in a scenario where the terminal device communicates with the network device in a backscatter manner will be described in connection with specific embodiments.

It is to be understood that in the backscatter communication, resource configuration information for an uplink transmission may be resource configuration information of a backscatter signal, and the information about communication duration may be information about backscatter communication duration.

It is to be noted that the resource configuration information of the backscatter signal may be the resource configuration information for the uplink transmission or the resource configuration information for the sidelink transmission. That is to say, a receiving end of the backscatter signal may be a network device or another terminal device.

In a first embodiment, the TBS is determined according to the energy storage state information of the terminal device.

In practical applications, the data transmission of the terminal device needs to be completed by using energy that is harvested and stored. Therefore, when the target TBS is to be determined, the energy storage state information of the terminal device may be considered. The energy storage state information of the terminal device is considered to determine the target TBS, which is beneficial to avoid the data transmission failure caused by insufficient energy storage of the terminal device.

It is to be understood that in the embodiment of the present disclosure, the energy storage state information of the terminal device may also be replaced by other equivalent expressions, such as, energy state information of the terminal device, energy storage information of the terminal device, etc., which is not limited in the present disclosure.

Optionally, the energy storage state information of the terminal device may represent a state of power harvesting of the terminal device, for example, the state of power harvesting of the terminal device before the data transmission, i.e., the current energy storage state of the terminal device.

It is to be understood that the expression of the energy storage state information of the terminal device is not limited in the present disclosure. For example, the energy storage state information of the terminal device may be expressed by a charging percentage of the energy storage unit, a value of voltage outputted by the energy storage unit, or an energy storage level each corresponding to a respective driving capability. For example, a first energy storage level corresponds to a capability of supporting driving the chip circuit to receive the carrier signal; a second energy storage level corresponds to a capability of supporting the chip circuit to perform backscatter processing on the data of the transport block to be sent; and a third energy storage level corresponds to a capability of supporting the chip circuit to send the backscatter signal, etc.

In some embodiments of the present disclosure, the terminal device may determine a target TBS according to the energy storage state information of the terminal device and the resource configuration information of the backscatter signal.

In some implementations, the operation that the terminal device may determine the target TBS according to the energy storage state information of the terminal device and the resource configuration information of the backscatter signal includes following operations.

A first TBS is determined according to the energy storage state information of the terminal device.

A second TBS is determined according to the resource configuration information of the backscatter signal.

The target TBS is determined from the first TBS and the second TBS.

For example, a smaller value is determined, from the first TBS and the second TBS, as the target TBS.

In some embodiments, the terminal device may determine the information about backscatter communication duration supported by the terminal device according to the energy storage state information. For example, the terminal device may determine the backscatter communication duration supported by the terminal device according to the energy storage state information of the terminal device in combination with power consumption information of the terminal device.

Optionally, the power consumption information of the terminal device may include the power consumption of related processing operations before the terminal device performs the data transmission, such as, the processing related to backscatter and the processing related to reception. The processing related to backscatter may include: reading data of the transport block from a memory, coding the read transport block, modulating the carrier signal to obtain the backscatter signal, etc. The processing related to reception may include processing operations such as demodulating the information carried in the carrier signal, decoding the information and storing the decoded information. Or, the power consumption information of the terminal device may also include the power consumption for the terminal device to perform the data transmission.

In other implementations, the time-domain resource information of the backscatter signal corresponds to a transmission duration, and the terminal device may determine the target duration information for calculating the target TBS among the transmission duration and the backscatter communication duration supported by the terminal device. For example, a smaller value may be determined, from a value of the transmission duration and a value of the backscatter communication duration, as the target duration information for calculating the target TBS. Furthermore, other reference information, such as configuration information other than the duration information of the time-domain resource in the resource configuration information of the backscatter signal, may also be considered to determine the target TBS.

In some embodiments, the terminal device may read the data of the transport block having a size corresponding to the target TBS from a memory according to the determined target TBS, and further perform processing such as coding, backscatter signal modulation, etc. on the data of the transport block, so as to send the transport block.

In some embodiments, the terminal device may report the energy storage state information of the terminal device to the network device, so that the network device determines the TBS selected by the terminal device according to the energy storage state information of the terminal device, and further detects the transport block according to the TBS, thereby ensuring that the terminal device has a consistent understanding of the TBS with the network device.

Optionally, the terminal device may periodically report the energy storage state information to the network device, or report the energy storage state information to the network device in an event-triggered manner.

In other embodiments, the terminal device may not report the energy storage state information of the terminal device to the network device. In this case, the network device may blindly detect the transport block sent by the terminal device.

In other embodiments, the terminal device may send first indication information to the network device. The first indication information is used for indicating information of the target TBS determined by the terminal device. For example, the information of the target TBS may be sent to the network device together with the transport block. That is to say, the information of the target TBS and the transport block may be carried in the same backscatter signal and sent to the network device.

Optionally, the first indication information may be carried by uplink control information. In this case, the network device may determine the target TBS according to the first indication information in the uplink control information.

In other embodiments, the transport block sent by the terminal device to the network device includes start identification information and/or end identification information of the transport block. The start identification information of the transport block is used for identifying a starting position of the transport block, and the end identification information of the transport block is used for identifying an ending position of the transport block.

Optionally, the start identification information and the end identification information of the transport block may be identification information agreed by the network device and the terminal device, and are respectively set at the starting position and the ending position of the transport block. In this case, the network device may determine the target TBS according to the start identification information and/or end identification information of the transport block.

FIG. 7 is a schematic diagram of selecting a TBS by a terminal device according to the energy storage state information. It is to be understood that the terminal device determines the TBS according to the energy storage state information in combination with other reference information, such as resource configuration information of the backscatter signal and strength information of the power supplying signal. Furthermore, after the TBS is determined, the terminal device may read data having a size corresponding to the TBS from a memory and send the data, which is beneficial to avoid the data transmission failure caused by insufficient energy storage of the terminal device.

In a second embodiment, the target TBS is determined according to the energy storage capability information of the terminal device.

In practical applications, the data transmission of the terminal device needs to be completed by using energy that is harvested and stored. Therefore, when the target TBS is to be determined, the energy storage capability information of the terminal device may be considered. The energy storage capability information of the terminal device is considered to determine the target TBS, which is beneficial to avoid the data transmission failure caused by the inadequate energy storage capability of the terminal device for transmitting the target TBS.

It is to be understood that the energy storage capability information of the terminal device may also be replaced by other equivalent expressions, such as, power harvesting capability information of the terminal device and the like, which is not limited in the present disclosure.

Optionally, the energy storage capability information of the terminal device may indicate the maximum energy that the terminal device may store, or a maximum state of power harvesting of the terminal device.

In some embodiments, the energy storage capability information of the terminal device may be equivalent to a maximum energy storage state of the terminal device.

In some embodiments of the present disclosure, the terminal device may determine the target TBS according to the energy storage capability information of the terminal device and the resource configuration information of the backscatter signal.

In some implementations, the operation that the terminal device may determine the target TBS according to the energy storage capability information of the terminal device and the resource configuration information of the backscatter signal includes following operations.

A third TBS is determined according to the energy storage capability information of the terminal device.

A fourth TBS is determined according to resource configuration information of the backscatter signal.

The target TBS is determined from the third TBS and the fourth TBS.

For example, a smaller value is determined, from the third TBS and the third TBS, as the target TBS.

In some embodiments, the terminal device may determine the information about backscatter communication duration supported by the terminal device according to the energy storage capability information. For example, the terminal device may determine the backscatter communication duration supported by the terminal device according to the energy storage capability information of the terminal device in combination with power consumption information of the terminal device.

It is to be understood that the specific implementations of the power consumption information of the terminal device may refer to the related description in the first embodiment, which will not be repeated herein for the sake of brevity.

In other implementations, the time-domain resource information of the backscatter signal corresponds to a transmission duration, and the terminal device may determine the target duration information for calculating the target TBS among the transmission duration and the backscatter communication duration supported by the terminal device. For example, a smaller value may be determined, from a value of the transmission duration and a value of the backscatter communication duration, as the target duration information for calculating the target TBS. Furthermore, other reference information, such as configuration information other than the duration information of the time-domain resource in the resource configuration information of the backscatter signal, may also be considered to determine the target TBS.

Furthermore, the terminal device may read the data of the transport block having a size corresponding to the target TBS from a memory according to the determined target TBS, and further perform processing such as coding, backscatter signal modulation, etc. on the data of the transport block, so as to send the transport block.

In some embodiments, the terminal device may report the energy storage capability information of the terminal device to the network device, so that the network device determines the TBS selected by the terminal device according to the energy storage capability information of the terminal device, and further detects the transport block according to the TBS, thereby ensuring that the terminal device has a consistent understanding of the TBS with the network device.

In other embodiments, the terminal device may not report the energy storage capability information of the terminal device to the network device. In this case, the network device may blindly detect the transport block sent by the terminal device.

In other embodiments, the terminal device may send first indication information to the network device. The first indication information is used for indicating information of the target TBS determined by the terminal device. For example, the information of the target TBS may be sent to the network device together with the transport block. That is to say, the information of the target TBS and the transport block may be carried in the same backscatter signal and sent to the network device.

Optionally, the information of the target TBS may be carried by uplink control information. In this case, the network device may determine the target TBS according to the first indication information in the uplink control information.

In other embodiments, the transport block sent by the terminal device to the network device includes start identification information and/or end identification information. The start identification information is used for identifying a starting position of the transport block and the end identification information is used for identifying an ending position of the transport block.

Optionally, the start identification information and the end identification information of the transport block may be identification information agreed by the network device and the terminal device, and are respectively set at the starting position and the ending position of the transport block.

In this case, the network device may determine the target TBS according to the start identification information and/or end identification information of the transport block.

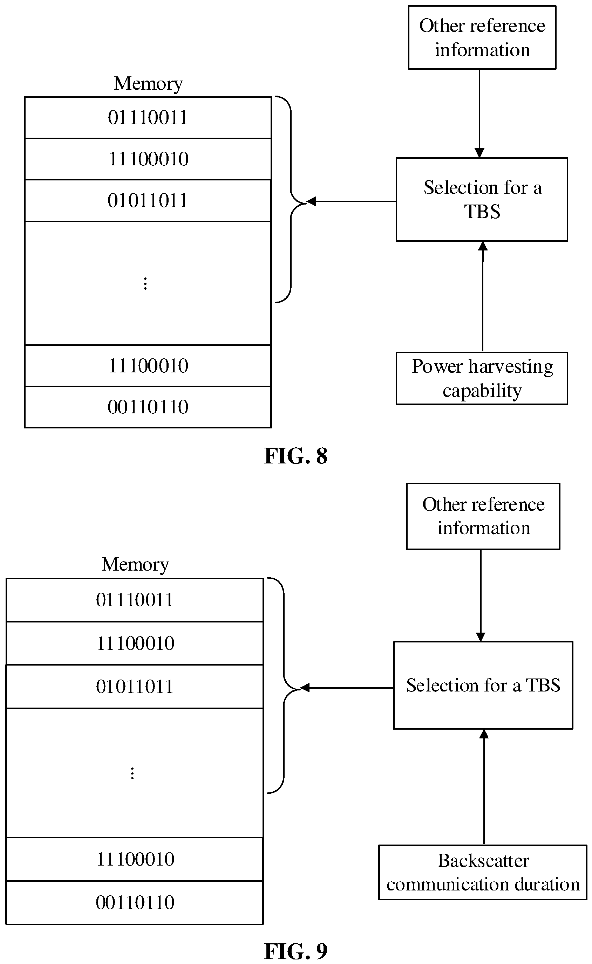

FIG. 8 is a schematic diagram of selecting a TBS by a terminal device according to the power harvesting capability information. It is to be understood that the terminal device determines the TBS according to the power harvesting capability information in combination with other reference information, such as, resource configuration information of the backscatter signal and strength information of the power supplying signal. Furthermore, after the TBS is determined, the terminal device may read data having a size corresponding to the TBS from a memory and send the data, which is beneficial to avoid the data transmission failure caused by the inadequate energy storage capability of the terminal device for transmitting the target TBS.

In a third embodiment, the TBS is determined according to the backscatter communication duration of the terminal device.

It is to be understood that the information about backscatter communication duration of the terminal device may also be replaced by other equivalent expressions, such as, information about zero-power-consumption communication duration of the terminal device, a communication duration of the zero-power-consumption terminal, a communication duration of the zero-power-consumption device and the like, which is not limited in the present disclosure.

In the embodiment of the present disclosure, the information about backscatter communication duration supported by the terminal device is positively correlated with the target TBS. That is to say, the longer the backscatter communication duration supported by the terminal device, the larger the target TBS of a transport block that the terminal device may transmit.

It is to be understood that the expression of the information about backscatter communication duration supported by the terminal device is not limited in the present disclosure. For example, the information about backscatter communication duration supported by the terminal device may be represented by the number of specific time units that may be slots, sub-frames, etc., or by backscatter communication duration levels. Each of the backscatter communication duration levels corresponds to a duration range, or a respective TBS threshold. That is to say, the backscatter communication duration level may support a transmission of a transport block having a size less than or equal to the TBS threshold corresponding to the backscatter communication duration level.

In some embodiments, the information about backscatter communication duration supported by the terminal device may be determined according to information, such as the energy storage state information, the energy storage capability information, the power consumption information of the terminal device, and the like.

As an implementation, the information about backscatter communication duration supported by the terminal device may be determined according to the energy storage state information of the terminal device. For example, the backscatter communication duration supported by the terminal device may be determined according to the energy storage state information of the terminal device in combination with the power consumption information of the terminal device. The backscatter communication duration determined in this case may be a backscatter communication duration currently supported by the terminal device.

As another implementation, the information about backscatter communication duration supported by the terminal device may be determined according to the energy storage capability information of the terminal device. For example, the terminal device may determine the backscatter communication duration supported by the terminal device according to the energy storage capability information of the terminal device in combination with the power consumption information of the terminal device. The backscatter communication duration determined in this case may be a maximum backscatter communication duration supported by the terminal device.

The information about backscatter communication duration supported by the terminal device is considered to determine the target TBS, which is beneficial to avoid the data transmission failure caused by insufficient backscatter communication duration supported by the terminal device.

In some embodiments of the disclosure, the terminal device may determine the target TBS according to the information about backscatter communication duration supported by the terminal device and resource configuration information of the backscatter signal.

In some implementations, the operation that the terminal device may determine the target TBS according to the information about backscatter communication duration supported by the terminal device and resource configuration information of the backscatter signal includes following operations.

A fifth TBS is determined according to the information about backscatter communication duration supported by the terminal device.

A sixth TBS is determined according to resource configuration information of the backscatter signal.

The target TBS is determined from the fifth TBS and the sixth TBS.

For example, a smaller value is determined, from the fifth TBS and the sixth TBS, as the target TBS.

In other implementations, the time-domain resource information of the backscatter signal corresponds to a transmission duration, and the terminal device may determine the target duration information for calculating the target TBS among the transmission duration and the backscatter communication duration supported by the terminal device. For example, a smaller value may be determined, from a value of the transmission duration and a value of the backscatter communication duration, as the target duration information for calculating the target TBS.

Furthermore, the terminal device may read the data of the transport block having a size corresponding to the target TBS from a memory according to the determined target TBS, and further perform processing such as coding, backscatter signal modulation, etc. on the data of the transport block, so as to send the transport block.

In some embodiments, the terminal device may report the information about backscatter communication duration supported by the terminal device to the network device, so that the network device determines the TBS selected by the terminal device according to the information about backscatter communication duration supported by the terminal device, and further detects the transport block according to the TBS, thereby ensuring that the terminal device has a consistent understanding of the TBS with the network device.

Optionally, the terminal device may periodically report the information about backscatter communication duration supported by the terminal device to the network device, or report the information about backscatter communication duration supported by the terminal device to the network device in an event-triggered manner.

In other embodiments, the terminal device may not report the information about backscatter communication duration supported by the terminal device to the network device. In this case, the network device may blindly detect the transport block sent by the terminal device.

In other embodiments, the terminal device may send first indication information to the network device. The first indication information is used for indicating information of the target TBS determined by the terminal device. For example, the information of the target TBS may be sent to the network device together with the transport block. That is to say, the information of the target TBS and the transport block may be carried in the same backscatter signal and sent to the network device.

Optionally, the information of the target TBS may be carried by uplink control information. In this case, the network device may determine the target TBS according to the first indication information in the uplink control information.

In other embodiments, the transport block sent by the terminal device to the network device includes start identification information and/or end identification information of the transport block. The start identification information of the transport block is used for identifying a starting position of the transport block, and the end identification information of the transport block is used for identifying an ending position of the transport block.

Optionally, the start identification information and the end identification information of the transport block may be identification information agreed by the network device and the terminal device, and are respectively set at the starting position and the ending position of the transport block. In this case, the network device may determine the target TBS according to the start identification information and/or end identification information of the transport block.

FIG. 9 is a schematic diagram of selecting a TBS by a terminal device according to the information about backscatter communication duration supported by the terminal device. It is to be understood that the terminal device determines the TBS according to the information about backscatter communication duration supported by the terminal device in combination with other reference information, such as resource configuration information of the backscatter signal. Furthermore, after the TBS is determined, the terminal device may read data having a size corresponding to the TBS from a memory and send the data, which is beneficial to avoid the data transmission failure caused by insufficient energy storage of the terminal device.

In a fourth embodiment, the target TBS is determined according to the strength information of the power supplying signal.

In actual deployment, different terminals may have different distances from the energy supply device, which leads to different power harvesting efficiencies of the terminal devices. For example, with the decrease of receiving strength of power supplying signal, the speed for power harvesting and storing energy by the power harvesting module of terminal decreases. For different terminal devices, the chip circuits need different powers (e.g. 10 uw) and different times to drive the power harvesting modules.

That is to say, when power harvesting is performed based on the same power supplying signal, the terminal devices at different distances will have different power harvesting efficiencies, leading to different energy storage states of the terminal devices. Accordingly, the backscatter communication durations supported by the terminal devices are also different, thereby affecting a TBS of transport block that a terminal device may transmit.

Therefore, the strength of the power supplying signal is in direct proportion to the power harvesting capability, the efficiency of the power harvesting and the backscatter communication duration of the terminal device, and the terminal device may determine the target TBS according to the strength of the power supplying signal. The specific implementations are similar to the implementations in the first to the third embodiments, which will not be repeated herein.

It is to be understood that the strength information of the power supplying signal of the terminal device may also be replaced by other equivalent expressions, such as receiving power information of the power supplying signal of the terminal device and the like, which will not limited in the present disclosure.

In some embodiments, the terminal device may report a measurement result of the power supplying signal, such as, the receiving strength, to the network device, so that the network device determines the TBS selected by the terminal device according to the measurement result of the power supplying signal, and further detects the transport block according to the TBS, thereby ensuring that the terminal device has a consistent understanding of the TBS with the network device.

Optionally, the terminal device may periodically report the measurement result of the power supplying signal to the network device, or report the measurement result of the power supplying signal to the network device in an event-triggered manner.

In other embodiments, the terminal device may not report the measurement result of the power supplying signal to the network device. In this case, the network device may blindly detect the transport block sent by the terminal device.

In other embodiments, the terminal device may send first indication information to the network device. The first indication information is used for indicating information of the target TBS determined by the terminal device. For example, the information of the target TBS may be sent to the network device together with the transport block. That is to say, the information of the target TBS and the transport block may be carried in the same backscatter signal and sent to the network device.

Optionally, the information of the target TBS may be carried by uplink control information. In this case, the network device may determine the target TBS according to the first indication information in the uplink control information.

In other embodiments, the transport block sent by the terminal device to the network device includes start identification information and/or end identification information of the transport block. The start identification information of the transport block is used for identifying a starting position of the transport block, and the end identification information of the transport block is used for identifying an ending position of the transport block.

Optionally, the start identification information and the end identification information of the transport block may be identification information agreed by the network device and the terminal device, and are respectively set at the starting position and the ending position of the transport block.

In this case, the network device may determine the target TBS according to the start identification information and/or end identification information of the transport block.

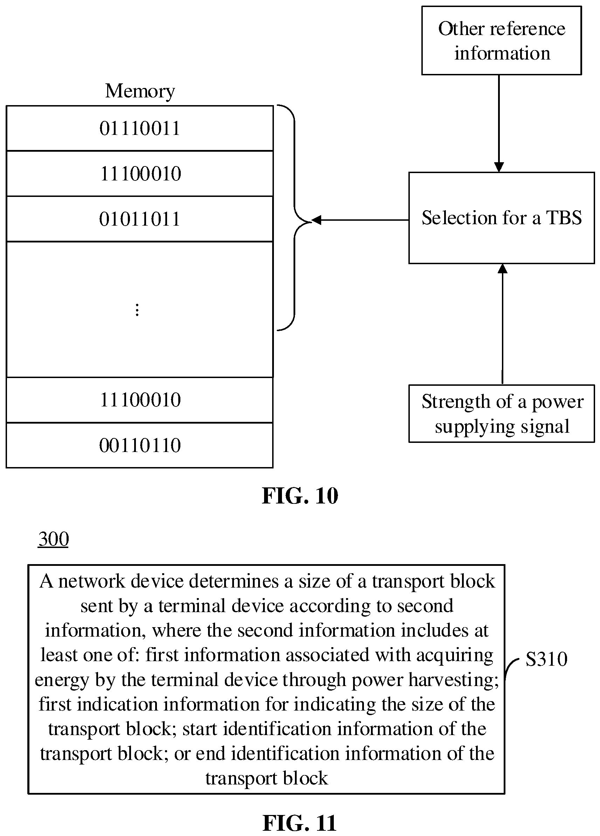

FIG. 10 is a schematic diagram of selecting a TBS by a terminal device according to the measurement result of the power supplying signal. It is to be understood that the terminal device determines the TBS according to the measurement result of the power supplying signal in combination with other reference information, such as resource configuration information of the backscatter signal, information about backscatter communication duration supported by the terminal device, and further, after the TBS is determined, the terminal device may read data having a size corresponding to the TBS from a memory and send the data.

To sum up, the terminal device may determine the target TBS according to the first information associated with acquiring energy by the terminal device through the power harvesting; and further send the transport block according to the target TBS, which is beneficial to ensure that the data is successfully transmitted.

Accordingly, the network device may determine the target TBS according to the first information, the first indication information, or the start identification information and/or the end identification information of the transport block, thereby implementing the detection of the transport block sent by the terminal device.

The method for wireless communication according to an embodiment of the present disclosure is described in detail above from the perspective of a terminal device with reference to FIG. 6 to FIG. 10. A method for wireless communication according to another embodiment of the present disclosure is described in detail below from the perspective of a network device with reference to FIG. 11. It is to be understood that the descriptions on the network device side correspond to the descriptions on the terminal device side, and for the descriptions on the network device side similar to the descriptions on the terminal device side, reference may be made to above corresponding descriptions, which will not be repeated herein to avoid repetition.

FIG. 11 is a schematic flowchart of a method 300 for wireless communication according to another embodiment of the present disclosure. The method 300 may be performed by a network device in the communication system shown in FIG. 1. As shown in FIG. 11, the method 300 includes an operation S310.

In operation S310, a network device determines a size of a transport block sent by a terminal device according to second information, where the second information includes at least one of followings:
first information associated with acquiring energy by the terminal device through power harvesting;
first indication information for indicating the size of the transport block;
start identification information of the transport block; or
end identification information of the transport block.

It is to be understood that the first information, the first indication information, the start identification information of the transport block, and the end identification information of the transport block may correspond to the first information, the first indication information, the start identification information of the transport block, and the end identification information in the method 200, respectively, and the specific implementations of which may refer to the related descriptions in the method 200.

In some embodiments, the first information includes at least one of followings:
energy storage state information of the terminal device;
energy storage capability information of the terminal device;
power consumption information of the terminal device;
information about communication duration supported by the terminal device; or
strength information of a power supplying signal of the terminal device.

In some embodiments of the present disclosure, the information about communication duration supported by the terminal device is a communication duration currently supported by the terminal device, or the maximum communication duration supported by the terminal device.

In some embodiments of the present disclosure, the method 300 further includes following.

The network device determines resource configuration information for an uplink transmission according to the first information or the first indication information.

In some embodiments of the present disclosure, the resource configuration information for the uplink transmission includes at least one of followings:
transmission resource information for the uplink transmission, modulation mode for the uplink transmission, data rate for the uplink transmission, or coding mode for the uplink transmission.

In some embodiments of the present disclosure, the method 300 further includes following.

The network device sends the resource configuration information for the uplink transmission to the terminal device.

In some embodiments of the present disclosure, the first information is sent through uplink control information.

In some embodiments of the disclosure, the first information and the transport block are sent through the same uplink signal by the terminal device

In some embodiments of the present disclosure, the first indication information is sent through uplink control information.

In some embodiments of the disclosure, the first indication information and the transport block are sent through the same uplink signal by the terminal device.

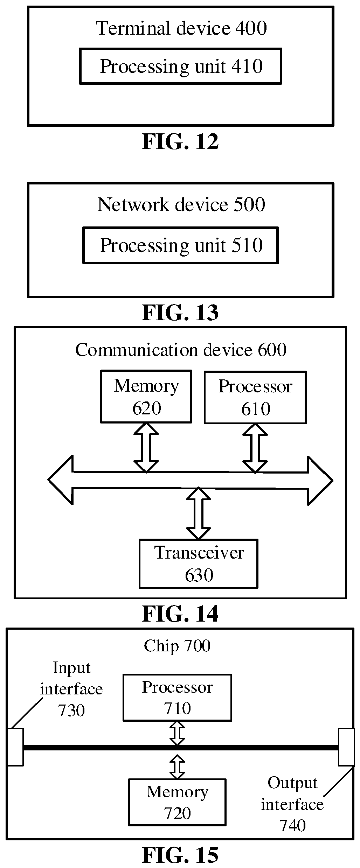

The method embodiments of the present disclosure have been described in detail above with reference to FIG. 6 to FIG. 11. The device embodiments of the present disclosure will be described in detail below with reference to FIG. 12 to FIG. 16. It is to be understood that the device embodiments correspond to the method embodiments, and descriptions in the device embodiments similar to the descriptions in the method embodiments may refer to the method embodiments.

FIG. 12 shows a schematic block diagram of a terminal device 400 according to an embodiment of the present disclosure. As shown in FIG. 12, the terminal device 400 includes a processing unit 410.

The processing unit 410 is configured to determine a target Transport Block Size (TBS) of a transport block to be sent according to first information, where the first information is associated with acquiring energy by the terminal device through power harvesting.

In some embodiments of the present disclosure, the first information includes at least one of followings:
energy storage state information of the terminal device;
energy storage capability information of the terminal device;
power consumption information of the terminal device;
information about communication duration supported by the terminal device; or
strength information of a power supplying signal of the terminal device.

In some embodiments of the present disclosure, the information about communication duration supported by the terminal device is a communication duration currently supported by the terminal device, or a maximum communication duration supported by the terminal device.

In some embodiments of the present disclosure, the processing unit 410 is further configured to determine the target TBS according to the first information and resource configuration information for an uplink transmission.

In some embodiments of the present disclosure, the resource configuration information for the uplink transmission includes at least one of followings:
transmission resource information for the uplink transmission, a modulation mode for the uplink transmission, a data rate for the uplink transmission, or a coding mode for uplink transmission.

In some embodiments of the present disclosure, the transmission resource information for the uplink transmission includes time-domain resource information for the uplink transmission, and the processing unit 410 is further configured to:
determine target duration information for calculating the target TBS according to a transmission duration corresponding to the time-domain resource information and the information about communication duration supported by the terminal device in the first information.

In some embodiments of the present disclosure, the processing unit 410 is further configured to:
determine a smaller value, from a value of the transmission duration corresponding to the time-domain resource information and a value of the information about communication duration, as the target duration information for calculating the target TBS.

In some embodiments of the present disclosure, the processing unit 410 is further configured to:
determine a first candidate TBS according to the first information;
determine a second candidate TBS according to the resource configuration information for the uplink transmission; and
determine the target TBS from the first candidate TBS and the second candidate TBS.

In some embodiments of the present disclosure, the processing unit 410 is further configured to:
determine a smaller value, from the first candidate TBS and the second candidate TBS, as the target TBS.

In some embodiments of the present disclosure, the resource configuration information for a backscatter signal is dynamically scheduled by a network device, or pre-configured.

In some embodiments of the present disclosure, the terminal device 400 further includes a

The communicating unit is used for transmitting the first information to the network device.

In some embodiments of the present disclosure, the first information is sent through uplink control information.

In some embodiments of the disclosure, the first information and the transport block are transmitted via the same uplink signal.

In some embodiments of the present disclosure, the terminal device 400 further includes a communicating unit.

The communicating unit is configured to send the first indication information to the network device, and the first indication information is used for indicating the target TBS.

In some embodiments of the present disclosure, the first information is sent through uplink control information.

In some embodiments of the disclosure, the first information and the transport block are sent through a same uplink signal.

In some embodiments of the disclosure, the transport block includes at least one of start identification information or end identification information, the start identification information being used for identifying a starting position of the transport block, and the end identification information being used for identifying an ending position of the transport block.

In some embodiments of the present disclosure, the processing unit 410 is further configured to:
determine an intermediate variable for TBS according to the first information; and
obtain the target TBS by quantizing the intermediate variable for TBS.

In some embodiments of the present disclosure, the processing unit 410 is further configured to:
determine, in a TBS table, a TBS not greater than the intermediate variable for TBS and having a smallest difference from the intermediate variable for TBS as the target TBS, the TBS table including multiple pieces of TBS information.

In some embodiments of the present disclosure, the TBS table is predefined.

Optionally, in some embodiments, the communicating unit may be a communication interface or transceiver or an input-output interface of a communication chip or a system-on-chip. The processing unit may be one or more processors.

It is to be understood that the terminal device 400 in the embodiment of the present disclosure may correspond to the terminal device in the method embodiments in the present disclosure, and that each of above operations and other operations and/or functions of the various units in the terminal device 400 is used for implementing the respective flow implemented by the terminal device in the method 200 shown in FIG. 6 to FIG. 10.

FIG. 13 is a schematic block diagram of a network device according to an embodiment of the present disclosure. The network device 500 shown in FIG. 13 includes a processing unit 510.

The processing unit 510 is configured to determine a size of a transport block sent by a terminal device according to second information, where the second information includes at least one of followings:

first information associated with acquiring energy by the terminal device through power harvesting;
first indication information for indicating the size of the transport block;
start identification information of the transport block; or
end identification information of the transport block.

In some embodiments of the present disclosure, the first information includes at least one of followings:
energy storage state information of the terminal device;
energy storage capability information of the terminal device;
power consumption information of the terminal device;
information about communication duration supported by the terminal device; or
strength information of a power supplying signal of the terminal device.

In some embodiments of the present disclosure, the information about communication duration supported by the terminal device is a communication duration currently supported by the terminal device, or a maximum communication duration supported by the terminal device.

In some embodiments of the present disclosure, the processing unit 510 is further configured to determine resource configuration information of a backscatter signal according to the first information.

In some embodiments of the present disclosure, the resource configuration information for the uplink transmission includes at least one of followings:
transmission resource information for the uplink transmission, a modulation mode for the uplink transmission, a data rate for the uplink transmission, or a coding mode for uplink transmission.

In some embodiments of the present disclosure, the network device 500 further includes a communicating unit.

The communicating unit is configured to send the resource configuration information for the uplink transmission to the terminal device.

In some embodiments of the present disclosure, the first information is sent through uplink control information.

In some embodiments of the disclosure, the first information and the transport block are sent through the same uplink signal by the terminal device.

In some embodiments of the present disclosure, the first indication information is sent through uplink control information.

In some embodiments of the disclosure, the first indication information and the transport block are sent through the same uplink signal by the terminal device.

Optionally, in some embodiments, the communicating unit may be a communication interface or transceiver or an input-output interface of a communication chip or a system-on-chip. The processing unit may be one or more processors.

It is to be understood that the network device 500 in the embodiment of the present disclosure may correspond to the network device in the method embodiments in the present disclosure, and that each of above operations and other operations and/or functions of the various units in the network device 500 is used for implementing the respective flow implemented by the network device in the method shown in FIG. 6 to FIG. 11.

FIG. 14 is a schematic structural diagram of a communication device 600 according to an embodiment of the present disclosure. The communication device 600 shown in FIG. 14 includes a processor 610 that may invoke and run a computer program from a memory to implement the method in the embodiment of the present disclosure.

Optionally, as shown in FIG. 14, the communication device 600 may also include a memory 620. The processor 610 may invoke and run a computer program from the memory 620 to implement the method in the embodiment of the present disclosure.

The memory 620 may be a separate device independent of or the memory 620 may be integrated into the processor 610.

Optionally, as shown in FIG. 14, the communication device 600 may also include a transceiver 630. The processor 610 may control the transceiver 630 to communicate with other devices, in particular, to send information or data to other devices, or receive information or data sent by other devices.

The transceiver 630 may include a transmitter and a receiver. The transceiver 630 may further include an antenna(s), the number of which may be one or more.

Optionally, the communication device 600 may be specifically a network device in the embodiments of the present disclosure, and the communication device 600 may implement the corresponding process implemented by the network device in each method of the embodiments of the present disclosure, which will not be repeated herein for the sake of brevity.

Optionally, the communication device 600 may be a mobile terminal/terminal device according to the embodiments of the present disclosure, and the communication device 600 may implement the corresponding flow implemented by the mobile terminal/terminal device in each method of the embodiments of the present disclosure, which will not be repeated herein for the sake of brevity.

FIG. 15 is a schematic structural diagram of a chip according to an embodiment of the present disclosure. The chip 700 shown in FIG. 15 includes a processor 710 that may invoke and run a computer program from a memory to implement the method in the embodiment of the present disclosure.

Optionally, as shown in FIG. 15, the chip 700 may also include a memory 720. The processor 710 may invoke and run a computer program from the memory 720 to implement the method in the embodiment of the present disclosure.

The memory 720 may be a separate device independent of the processor 710 or the memory 720 may be integrated in the processor 710.

Optionally, the chip 700 may also include an input interface 730. The processor 710 may control the input interface 730 to communicate with other devices or chips, and in particular may obtain information or data sent by other devices or chips.

Optionally, the chip 700 may also include an output interface 740. The processor 710 may control the output interface 740 to communicate with other devices or chips, and in particular may output information or data to other devices or chips.

Optionally, the chip may be applied to the network device in the embodiments of the present disclosure, and the chip may implement the corresponding process implemented by the network device in each method of the embodiments of the disclosure, which is not repeated herein for the sake of brevity.

Optionally, the chip may be applied to the mobile terminal/terminal device in the embodiments of the present disclosure, and the chip may implement the corresponding flow implemented by the mobile terminal/terminal device in each method of the embodiment of the disclosure. For the sake of simplicity, which will not be repeated herein for the sake of brevity.

It is to be understood that chips mentioned in the embodiments of the present disclosure may also be referred to as system level chips, system chips, chip systems or on-chip system chips, etc.

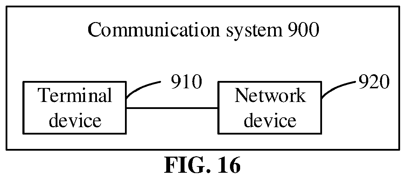

FIG. 16 is a schematic block diagram of a communication system 900 according to an embodiment of the present disclosure. As shown in FIG. 16, the communication system 900 includes a terminal device 910 and a network device 920.

The terminal device 910 may be configured to implement the corresponding functions implemented by the terminal device in the above method, and the network device 920 may be configured to implement the corresponding functions implemented by the network device in the above method, which will not be repeated herein for the sake of brevity.

It is to be understood that the processor of the embodiments of the disclosure may be an integrated circuit chip with signal processing capacity. In an implementation process, various steps of the above method embodiments may be completed by an integrated logic circuit of hardware in the processor or an instruction in the form of software. The above processor may be a general-purpose processor, a Digital Signal Processor (DSP), an Application Specific Integrated Circuit (ASIC), a Field Programmable Gate Array (FPGA), or other programmable logic devices, discrete gate or transistor logic devices, and discrete hardware components. Various methods, steps, and logical block diagrams disclosed in the embodiments of the disclosure may be implemented or performed. The general-purpose processor may be a microprocessor, any conventional processor, or the like. Steps of the methods disclosed with reference to the embodiments of the disclosure may be directly performed and accomplished by a hardware decoding processor, or may be performed and accomplished by a combination of hardware and software modules in the decoding processor. The software module may be located in a storage medium mature in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It may be understood that the memory in the embodiments of the disclosure may be a volatile memory or a nonvolatile memory, or may include a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, which is used as an external high-speed cache. By way of example but not restrictive description, many forms of RAMs may be used, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It is to be noted that the memory of the systems and methods described in this specification includes but is not limited to these and any other proper types of memories.

It is to be understood that the abovementioned memories are exemplary but not restrictive, for example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM). That is to say, the memories described in the embodiment of the disclosure are intended to include, but not limited to, these and any other suitable types of memories.

The embodiments of the disclosure further provide a computer-readable storage medium, which is configured to store a computer program.

Optionally, the computer-readable storage medium may be applied to a network device in the embodiments of the disclosure. The computer program enables a computer to execute corresponding flows implemented by the network device in each method of the embodiments of the disclosure, which will not be elaborated here for simplicity.

Optionally, the computer-readable storage medium may be applied to a mobile terminal/a terminal device in the embodiments of the disclosure. The computer program enables a computer to execute corresponding flows implemented by the mobile terminal/the terminal device in each method of the embodiments of the disclosure, which will not be elaborated here for simplicity.

The embodiments of the disclosure further provide a computer program product, which includes a computer program instruction.

Optionally, the computer program product may be applied to a network device in the embodiments of the disclosure. The computer program instruction enables a computer to execute corresponding flows implemented by the network device in each method of the embodiments of the disclosure, which will not be elaborated here for simplicity.

Optionally, the computer program product may be applied to a mobile terminal/a terminal device in the embodiments of the disclosure. The computer program instruction enables a computer to execute corresponding flows implemented by the mobile terminal/the terminal device in each method of the embodiments of the disclosure, which will not be elaborated here for simplicity.

The embodiments of the disclosure further provide a computer program.

Optionally, the computer program may be applied to a network device in the embodiments of the disclosure. The computer program runs in a computer to enable the computer to execute corresponding flows implemented by the network device in each method of the embodiments of the disclosure, which will not be elaborated here for simplicity.

Optionally, the computer program may be applied to a mobile terminal/a terminal device in the embodiments of the disclosure. When running on a computer, the computer program enables a computer to execute corresponding flows implemented by the mobile terminal/the terminal device in each method of the embodiments of the disclosure, which will not be elaborated here for simplicity.

Those of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may realize the described functions for each particular disclosure by different methods, but it is not be considered that the implementation is beyond the scope of the disclosure.

It may be clearly understood by a person skilled in the art that, for the purpose of convenient and brief description, for a detailed working process of the foregoing system, apparatus, and unit, reference may be made to a corresponding process in the foregoing method embodiments, and details are not described again herein.

In the several embodiments provided in the disclosure, it is to be understood that the disclosed system, apparatus, and method may be implemented in other modes. For example, the apparatus embodiment described above is only schematic, and for example, division of the units is only logic function division, and other division manners may be adopted during practical implementation. For example, a plurality of units or components may be combined or integrated into another system, or some characteristics may be neglected or not executed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

In addition, functional units in various embodiments of the disclosure may be integrated into one processing unit, or each of the units may be physically separated, or two or more units may be integrated into one unit.

When the functions are realized in a form of a software functional unit and sold or used as an independent product, they may be stored in a computer-readable storage medium. Based on this understanding, the technical solutions of the embodiments of the disclosure essentially or the parts that contribute to the prior art, or part of the technical solutions can be embodied in the form of a software product. The computer software product is stored in a storage medium, including a plurality of instructions for causing a computer device (which may be a personal computer, a server, or a network device, and the like) to execute all or part of the steps of the method described in the embodiments of the disclosure. The foregoing storage medium includes a USB flash disk, a mobile hard disk drive, a ROM, a RAM, and various media that can store program codes, such as a magnetic disk or an optical disk.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure shall be defined by the scope of protection of the claims.

## Claims

1. A method for wireless communication, comprising:
determining, by a terminal device, a target Transport Block Size, TBS, of a transport block to be sent according to first information, wherein the first information is associated with acquiring energy by the terminal device through power harvesting, and the energy is used by the terminal device for communication.

2. The method of claim 1, wherein the first information comprises at least one of:
energy storage state information of the terminal device;
energy storage capability information of the terminal device;
power consumption information of the terminal device;
information about communication duration supported by the terminal device; or
strength information of a power supplying signal of the terminal device.

3. The method of claim 2, wherein the information about communication duration supported by the terminal device is a backscatter communication duration currently supported by the terminal device, or a maximum backscatter communication duration supported by the terminal device.

4. The method of any one of claims 1 to 3, wherein determining, by the terminal device, the target TBS of the transport block to be sent according to the first information comprises:
determining, by the terminal device, the target TBS according to the first information and resource configuration information for an uplink transmission.

5. The method of claim 4, wherein the resource configuration information for the uplink transmission comprises at least one of:
transmission resource information for the uplink transmission, a modulation mode for the uplink transmission, a data rate for the uplink transmission, or a coding mode for the uplink transmission.

6. The method of claim 5, wherein the transmission resource information for the uplink transmission comprises time-domain resource information for the uplink transmission, and the method further comprises:
determining target duration information for calculating the target TBS according to a transmission duration corresponding to the time-domain resource information for the uplink transmission and information about communication duration supported by the terminal device in the first information.

7. The method of claim 6, wherein determining the target duration information for calculating the target TBS according to the transmission duration corresponding to the time-domain resource information for the uplink transmission and the information about communication duration supported by the terminal device in the first information comprises:
determining a smaller value, from a value of the transmission duration corresponding to the time-domain resource information for the uplink transmission and a value of the information about communication duration, as the target duration information for calculating the target TBS.

8. The method of claim 4 or 5, wherein determining, by the terminal device, the target TBS according to the first information and the resource configuration information for the uplink transmission comprises:
determining a first candidate TBS according to the first information;
determining a second candidate TBS according to the resource configuration information for the uplink transmission; and
determining the target TBS from the first candidate TBS and the second candidate TBS.

9. The method of claim 8, wherein determining the target TBS from the first candidate TBS and the second candidate TBS comprises:
determining a smaller value, from the first candidate TBS and the second candidate TBS, as the target TBS.

10. The method of any one of claims 4 to 9, wherein the resource configuration information for the uplink transmission is dynamically scheduled by a network device, or pre-configured.

11. The method of any one of claims 1 to 10, further comprising:
sending, by the terminal device, the first information to the network device.

12. The method of claim 11, wherein the first information is sent through uplink control information.

13. The method of claim 11 or 12, wherein the first information and the transport block are sent through a same uplink signal.

14. The method of any one of claims 1 to 10, further comprising:
sending, by the terminal device, first indication information to the network device, wherein the first indication information is used for indicating the target TBS.

15. The method of claim 14, wherein the first indication information is sent through uplink control information.

16. The method of claim 14 or 15, wherein the first indication information and the transport block are sent through a same uplink signal.

17. The method of any one of claims 1 to 10, wherein the transport block comprises at least one of start identification information or end identification information, the start identification information being used for identifying a starting position of the transport block, and the end identification information being used for identifying an ending position of the transport block.

18. The method of any one of claims 1 to 17, wherein determining, by the terminal device, the target TBS of the transport block to be sent according to the first information comprises:
determining, by the terminal device, an intermediate variable for TBS according to the first information; and
obtaining the target TBS by quantizing the intermediate variable for TBS.

19. The method of claim 18, wherein obtaining the target TBS by quantizing the intermediate variable for TBS comprises:
determining, in a TBS table, a TBS not greater than the intermediate variable for TBS and having a smallest difference from the intermediate variable for TBS as the target TBS, the TBS table comprising a plurality of pieces of TBS information.

20. The method of claim 19, wherein the TBS table is predefined.

21. A method for wireless communication, comprising:
determining, by a network device, a size of a transport block sent by a terminal device according to second information, wherein the second information comprises at least one of:
first information associated with acquiring energy by the terminal device through power harvesting;
first indication information for indicating the size of the transport block;
start identification information of the transport block; or
end identification information of the transport block.

22. The method of claim 21, wherein the first information comprises at least one of:
energy storage state information of the terminal device;
energy storage capability information of the terminal device;
power consumption information of the terminal device;
information about communication duration supported by the terminal device; or
strength information of a power supplying signal of the terminal device.

23. The method of claim 22, wherein the information about communication duration supported by the terminal device is a communication duration currently supported by the terminal device, or a maximum communication duration supported by the terminal device.

24. The method of any one of claims 21 to 23, further comprising:
determining, by the network device, resource configuration information for an uplink transmission according to the first information.

25. The method of claim 24, wherein the resource configuration information for the uplink transmission comprises at least one of:
transmission resource information for the uplink transmission, a modulation mode for the uplink transmission, a data rate for the uplink transmission, or a coding mode for uplink transmission.

26. The method of claim 25, further comprising:
sending, by the network device, the resource configuration information for the uplink transmission to the terminal device.

27. The method of any one of claims 21 to 26, wherein the first information is sent through uplink control information.

28. The method of any one of claims 21 to 27, wherein the first information and the transport block are sent through a same uplink signal by the terminal device.

29. The method of any one of claims 21 to 28, wherein the first indication information is sent through uplink control information.

30. The method of any one of claims 21 to 29, wherein the first indication information and the transport block are sent through a same uplink signal by the terminal device.

31. A terminal device, comprising:
a processing unit, configured to determine a target Transport Block Size, TBS, of a transport block to be sent according to first information, wherein the first information is associated with acquiring energy by the terminal device through power harvesting.

32. The terminal device of claim 31, wherein the first information comprises at least one of:
energy storage state information of the terminal device;
energy storage capability information of the terminal device;
power consumption information of the terminal device;
information about communication duration supported by the terminal device; or
strength information of a power supplying signal of the terminal device.

33. The terminal device of claim 32, wherein the information about communication duration supported by the terminal device is a communication duration currently supported by the terminal device, or a maximum communication duration supported by the terminal device.

34. The terminal device of any one of claims 31 to 33, wherein the processing unit is further configured to determine the target TBS according to the first information and resource configuration information for an uplink transmission.

35. The terminal device of claim 34, wherein the resource configuration information for the uplink transmission comprises at least one of:
transmission resource information for the uplink transmission, a modulation mode for the uplink transmission, a data rate for the uplink transmission, or a coding mode for uplink transmission.

36. The terminal device of claim 35, wherein the transmission resource information for the uplink transmission comprises time-domain resource information for the uplink transmission, and the processing unit is further configured to:
determine target duration information for calculating the target TBS according to a transmission duration corresponding to the time-domain resource information and the information about communication duration supported by the terminal device in the first information.

37. The terminal device of claim 36, wherein the processing unit is further configured to:
determine a smaller value, from a value of the transmission duration corresponding to the time-domain resource information and a value of the information about communication duration, as the target duration information for calculating the target TBS.

38. The terminal device of claim 34 or 35, wherein the processing unit is further configured to:
determine a first candidate TBS according to the first information;
determine a second candidate TBS according to the resource configuration information for the uplink transmission; and
determine the target TBS from the first candidate TBS and the second candidate TBS.

39. The terminal device of claim 38, wherein the processing unit is further configured to:
determine a smaller value, from the first candidate TBS and the second candidate TBS, as the target TBS.

40. The terminal device of any one of claims 34 to 39, wherein the resource configuration information for the uplink transmission is dynamically scheduled by a network device, or pre-configured.

41. The terminal device of any one of claims 31 to 40, further comprising:
a communicating unit, configured to send the first information to the network device.

42. The terminal device of claim 41, wherein the first information is sent through uplink control information.

43. The terminal device of claim 41 or 42, wherein the first information and the transport block are sent through a same uplink signal.

44. The terminal device of any one of claims 31 to 40, further comprising:
a communicating unit, configured to send the first indication information to the network device, wherein the first indication information is used for indicating the target TBS.

45. The terminal device of claim 44, wherein the first indication information is sent through uplink control information.

46. The terminal device of claim 44 or 45, wherein the first indication information and the transport block are sent through a same uplink signal.

47. The terminal device of any one of claims 31 to 40, wherein the transport block comprises at least one of start identification information or end identification information, the start identification information being used for identifying a starting position of the transport block, and the end identification information being used for identifying an ending position of the transport block.

48. The terminal device of any one of claims 31 to 47, wherein the processing unit is further configured to:
determine an intermediate variable for TBS according to the first information; and
obtain the target TBS by quantizing the intermediate variable for TBS.

49. The terminal device of claim 48, wherein the processing unit is further configured to:
determine, in a TBS table, a TBS not greater than the intermediate variable for TBS and having a smallest difference from the intermediate variable for TBS as the target TBS, the TBS table comprising a plurality of pieces of TBS information.

50. The terminal device of claim 49, wherein the TBS table is predefined.

51. A network device, comprising:
a processing unit, configured to determine a size of a transport block sent by a terminal device according to second information, wherein the second information comprises at least one of:
first information associated with acquiring energy by the terminal device through power harvesting;
first indication information for indicating the size of the transport block;
start identification information of the transport block; or
end identification information of the transport block.

52. The network device of claim 51, wherein the first information comprises at least one of:
energy storage state information of the terminal device;
energy storage capability information of the terminal device;
power consumption information of the terminal device;
information about communication duration supported by the terminal device; or
strength information of a power supplying signal of the terminal device.

53. The network device of claim 52, wherein the information about communication duration supported by the terminal device is a communication duration currently supported by the terminal device, or a maximum communication duration supported by the terminal device.

54. The network device of any one of claims 51 to 53, wherein the processing unit is further configured to determine resource configuration information for an uplink transmission according to the first information.

55. The network device of claim 54, wherein the resource configuration information for the uplink transmission comprises at least one of:
transmission resource information for the uplink transmission, a modulation mode for the uplink transmission, a data rate for the uplink transmission, or a coding mode for uplink transmission.

56. The network device of claim 55, further comprising:
a communicating unit, configured to send the resource configuration information for the uplink transmission to the terminal device .

57. The network device of any one of claims 51 to 56, wherein the first information is sent through uplink control information.

58. The network device of any one of claims 51 to 57, wherein the first information and the transport block are sent through a same uplink signal by the terminal device.

59. The network device of any one of claims 51 to 58, wherein the first indication information is sent through uplink control information.

60. The network device of any one of claims 51 to 59, wherein the first indication information and the transport block are sent through a same uplink signal by the terminal device.

61. A terminal device, comprising: a processor and a memory configured to store a computer program, wherein the processor is configured to invoke and run the computer program stored in the memory to perform the method of any one of claims 1 to 20.

62. A chip, comprising: a processor configured to invoke and run a computer program from a memory, to enable a device on which the chip is mounted to perform the method of any one of claims 1 to 20.

63. A computer-readable storage medium, configured to store a computer program that causes a computer to perform the method of any one of claims 1 to 20.

64. A computer program product, comprising computer program instructions that cause a computer to perform the method of any one of claims 1 to 20.

65. A computer program, causing a computer to perform the method of any one of claims 1 to 20.

66. A network device, comprising: a processor and a memory configured to store a computer program, wherein the processor is configured to invoke and run the computer program stored in the memory to perform the method of any one of claims 21 to 30.

67. A chip, comprising: a processor configured to invoke and run a computer program from a memory to enable a device on which the chip is mounted to perform the method of any one of claims 21 to 30.

68. A computer-readable storage medium, configured to store a computer program that causes a computer to perform the method of any one of claims 21 to 30.

69. A computer program product, comprising computer program instructions that cause a computer to perform the method of any one of claims 21 to 30.

70. A computer program, causing a computer to perform the method of any one of claims 21 to 30.
